# FASCICULE DE BREVET EUROPEEN

(11) **EP 2 363 729 B1**
(45) Date de publication et mention de la délivrance du brevet: **23.12.2015**
(21) Numéro de dépôt: 11156011.6
(22) Date de dépôt: 25.02.2011
(51) Int. Cl.: G01S 13/44, H01Q 25/02

(54) **Formateur de voies reconfigurable pour antenne réseau**
Erzeuger von rekonfigurierbaren Kanälen für Netzantenne
Channel formatter that can be reconfigured for an array antenna

(30) Priorité: 26.02.2010 FR 1000808
(43) Date de publication de la demande: 07.09.2011
(73) Titulaire: THALES, 92400 Courbevoie (FR)
(72) Inventeur: Formont, Stéphane, 91570 Bièvres (FR); Renard, Christian, 92100 Boulogne Billancourt (FR); Fourdin, Christian, 78990 Elancourt (FR); Chabod, Luc, 78150 Chesnay (FR)
(74) Mandataire: Collet, Alain

(56) Documents cités:
- WO-A2-2008/048354
- FR-A1- 2 762 717
- US-A- 5 184 136
- US-A1- 2006 055 589

## Description

L'invention se situe dans le domaine des antennes réseau, en particulier des antennes réseau actives à balayage électronique. Elle concerne un formateur de voies pouvant équiper une telle antenne réseau.

Une antenne réseau dite active présente une architecture à amplification distribuée, c'est-à-dire qu'elle comprend un élément d'amplification radiofréquence positionné entre le point d'entrée de l'antenne réseau et chaque élément rayonnant de l'antenne réseau. Les éléments d'amplification sont en général des modules pouvant être utilisés à la fois en émission et en réception. Une antenne réseau active à balayage électronique permet de modifier par commande électronique la directivité et l'orientation du faisceau émis par l'antenne réseau. Pour ce faire, les modules d'émission et de réception insérés entre le point d'entrée de l'antenne réseau et les éléments rayonnants comportent en outre des éléments de déphasage. Une antenne à balayage électronique permet ainsi, dans des temps relativement courts, d'assurer soit un balayage continu de l'espace, soit des pointages successifs dans des directions bien déterminées, soit des alternances faisceau étroit / faisceau étendu, soit toute autre combinaison de ces situations.

Les antennes réseau peuvent comporter un grand nombre d'éléments rayonnants, pouvant atteindre plusieurs milliers. Dans ce cas, les modules d'émission/réception associés aux éléments rayonnants ne sont généralement pas commandés individuellement, mais par blocs. Les éléments rayonnants et leurs modules d'émission/réception associés sont ainsi regroupés en différents ensembles appelés sous-réseaux. Du point de vue de la chaîne de traitement de l'antenne réseau, un sous-réseau est perçu comme comportant un unique module d'émission/réception et un unique élément rayonnant.

Les antennes réseau actuelles pour application radar aéroporté sont typiquement découpées en quatre sous-réseaux. Lorsque les antennes réseau sont de forme circulaire, les sous-réseaux forment par exemple des quadrants, les signaux radiofréquence issus des quadrants étant additionnés pour générer, à la réception, des signaux radiofréquence appelés communément signaux monopulse. Ces signaux correspondent à la somme des signaux radiofréquence en sortie des quatre quadrants, à la différence entre les signaux radiofréquence en sortie des quadrants d'un côté de l'antenne réseau et les signaux radiofréquence en sortie des quadrants de l'autre côté de l'antenne réseau, et à la différence entre les signaux radiofréquence en sortie des quadrants supérieurs et les signaux radiofréquence en sortie des quadrants inférieurs de l'antenne réseau. Ces signaux sont respectivement dirigés vers une voie somme, une voie différence circulaire et une voie différence élévation. La sommation et la différence des signaux radiofréquence ainsi que leur routage sur les différentes voies sont réalisés au moyen d'un dispositif appelé formateur de voies. Un formateur de voies est généralement constitué de coupleurs appelés "T magiques".

Un exemple de formateur de voies pour application radar aéroporté comportant quatre quadrants somme et différence est donné dans le document US 5 184 136

Avec le développement des traitements radar, les antennes réseau nécessitent un découpage de plus en plus fin du réseau en même temps qu'une possibilité de reconfiguration du routage des signaux radiofréquence sur les différentes voies de réception de l'antenne réseau. A titre d'exemple, on peut citer les traitements adaptatifs spatio-temporels, connus de l'homme du métier sous l'expression anglo-saxonne "Space-Time Adaptive Processing" ou STAP. Ces traitements permettent de lutter contre le fouillis et d'éliminer les signaux parasites en émettant un faisceau dont le diagramme de rayonnement présente un lobe principal relativement fin et en effectuant un traitement multivoies à la réception. Plus généralement, une antenne réseau peut être utilisée dans de multiples applications, telles que la détection et la poursuite de cibles, la guerre électronique ou encore les communications. Les sous-réseaux doivent alors être regroupés selon des combinaisons qui dépendent de l'application.

Les formateurs de voies classiques ne permettent pas de répondre à ces besoins. En effet, ces formateurs de voies sont figés, dans le sens où ils ne peuvent pas être reconfigurés de manière à réaliser d'autres opérations sur les signaux radiofréquence issus des sous-réseaux que les opérations préétablies et qu'ils ne peuvent pas router différemment les signaux radiofréquence sur les différentes voies de réception de la chaîne de traitement.

Un but de l'invention est notamment de remédier à tout ou partie des inconvénients précités en proposant un formateur de voies qui soit reconfigurable. A cet effet, l'invention a pour objet un formateur de voies pouvant équiper une antenne réseau comportant n sous-réseaux et m voies de réception, avec n supérieur ou égal à m, chaque sous-réseau étant apte à délivrer un signal radiofréquence, le formateur de voies étant caractérisé en ce qu'il comporte :
- n convertisseurs radiofréquence/optique, chaque convertisseur radiofréquence/optique étant apte à délivrer un signal optique modulé par un signal radiofréquence issu de l'un des sous-réseaux,
- m à n convertisseurs optique/radiofréquence, chaque convertisseur optique/radiofréquence étant apte à délivrer un signal radiofréquence porté par un signal optique,
- des moyens reconfigurables de routage des signaux optiques aptes à diriger chaque signal radiofréquence porté par un signal optique vers l'un des convertisseurs optique/radiofréquence, et
- au moins un moyen de sommation, chaque moyen de sommation étant apte à délivrer un signal radiofréquence égal à une somme de signaux radiofréquence,
- le formateur de voies étant configuré de manière à délivrer sur chaque voie de réception un signal radiofréquence correspondant à une somme de 1 à n signaux radiofréquence issus des sous-réseaux.

L'invention a notamment pour avantage qu'elle permet de modifier simplement et rapidement les combinaisons de signaux radiofréquence pour chaque voie de réception d'une antenne réseau. Dans la mesure où les signaux radiofréquence sont transmis par l'intermédiaire de signaux optiques, l'invention permet en outre de déporter facilement les moyens de sommation des signaux radiofréquence des éléments rayonnants.

Selon une première forme particulière de réalisation, les moyens reconfigurables de routage des signaux optiques sont une matrice de commutation optique comportant n entrées et n sorties, chaque entrée de la matrice de commutation optique étant apte à recevoir l'un des signaux optiques issus des convertisseurs radiofréquence/optique, et chaque sortie de la matrice de commutation étant connectée à une entrée d'un convertisseur optique/radiofréquence.

Dans cette première forme de réalisation, les n convertisseurs radiofréquence/optique peuvent être aptes à délivrer des signaux optiques compris dans des plages de longueur d'onde distinctes les unes des autres, et le formateur de voies peut comporter, en outre :
- un multiplexeur en longueur d'onde comprenant n entrées aptes à recevoir les n signaux optiques et une sortie apte à délivrer un signal optique multiplexé par répartition en longueur d'onde, et
- un démultiplexeur en longueur d'onde comprenant une entrée apte à recevoir le signal optique multiplexé et n sorties aptes à délivrer les n signaux optiques démultiplexés sur les n entrées de la matrice de commutation optique.

Selon une deuxième forme particulière de réalisation, les moyens reconfigurables de routage des signaux optiques comprennent :
- les n convertisseurs radiofréquence/optique, les longueurs d'onde des signaux optiques délivrés par lesdits convertisseurs pouvant être configurées individuellement et étant différentes les unes des autres,
- un coupleur optique comportant n entrées aptes à recevoir les n signaux optiques et une sortie apte à délivrer un signal optique couplé, et
- un démultiplexeur en longueur d'onde comportant une entrée apte à recevoir le signal optique couplé et n sorties, les n signaux optiques étant délivrés sur lesdites sorties en fonction de leur longueur d'onde.

Selon une troisième forme particulière de réalisation, les moyens reconfigurables de routage des signaux optiques comprennent :
- les n convertisseurs radiofréquence/optique, les longueurs d'onde des signaux optiques délivrés par lesdits convertisseurs pouvant être configurées individuellement,
- un réseau sélectif planaire comportant n entrées aptes à recevoir les n signaux optiques et une sortie apte à délivrer un signal optique multiplexé, chaque entrée du réseau sélectif planaire étant reliée à la sortie par un canal, chaque canal permettant la transmission de signaux optiques dans des plages de longueur d'onde réparties périodiquement, et
- un démultiplexeur en longueur d'onde comportant une entrée apte à recevoir le signal optique multiplexé et n sorties, l'entrée du démultiplexeur en longueur d'onde étant reliée à chaque sortie par un canal,
le réseau sélectif planaire et le démultiplexeur en longueur d'onde étant configurés de manière à ce que chaque canal du démultiplexeur permette la transmission de signaux optiques dans une plage de longueur d'onde couvrant une seule plage de longueur d'onde de chacun des canaux du réseau sélectif planaire.

Dans cette troisième forme de réalisation, la largeur de la plage de longueur d'onde de chaque canal du démultiplexeur en longueur d'onde peut être sensiblement égale à la période de répétition des plages de longueur d'onde de chaque canal du réseau sélectif planaire.

La sortie du multiplexeur en longueur d'onde, du coupleur optique ou du réseau sélectif planaire peut être reliée à l'entrée du démultiplexeur en longueur d'onde par une fibre optique apte à transmettre des signaux optiques sur toutes les plages de longueur d'onde utilisées par les convertisseurs radiofréquence/optique.

Chaque moyen de sommation peut comporter un convertisseur optique/radiofréquence comprenant une entrée apte à recevoir de deux à n signaux optiques et une sortie apte à délivrer un signal radiofréquence correspondant à la somme des signaux radiofréquences portés par les signaux optiques reçus en entrée.

Alternativement, chaque moyen de sommation peut comporter un additionneur radiofréquence comprenant au moins deux entrées recevant chacune un signal radiofréquence et une sortie apte à délivrer un signal radiofréquence correspondant à la somme des signaux radiofréquences reçus en entrée.

Selon une forme particulière de réalisation, un moyen de sommation comporte un convertisseur optique/radiofréquence comprenant deux entrées et une sortie, chaque entrée étant apte à recevoir au moins un signal optique portant un signal radiofréquence, la sortie étant apte à délivrer un signal radiofréquence correspondant à la différence entre le ou les signaux radiofréquence portés par le ou les signaux optiques reçus sur une première entrée du convertisseur optique/radiofréquence et le ou les signaux radiofréquence portés par le ou les signaux optiques reçus sur une deuxième entrée du convertisseur optique/radiofréquence.

Dans cette forme particulière de réalisation, le moyen de sommation apte à délivrer un signal radiofréquence correspondant à une différence de signaux radiofréquence peut être une photodiode balancée.

Selon une forme particulière de réalisation, chaque convertisseur radiofréquence/optique délivre deux signaux optiques, l'un des deux signaux radiofréquence portés optiquement étant en opposition de phase par rapport à l'autre, les moyens reconfigurables de routage des signaux optiques, les convertisseurs optique/radiofréquence et le ou les moyens de sommation étant adaptés afin de délivrer sur chaque voie de réception un signal radiofréquence correspondant à une somme de signaux radiofréquence en phase, en opposition de phase, ou des deux.

L'invention sera mieux comprise et d'autres avantages apparaîtront à la lecture de la description détaillée de modes de réalisation donnés à titre d'exemple, description faite en regard de dessins annexés qui représentent :
- la figure 1, un formateur de voies selon un premier exemple de réalisation de l'invention ;
- la figure 2, un formateur de voies selon un deuxième exemple de réalisation de l'invention ;
- la figure 3, un formateur de voies selon un troisième exemple de réalisation de l'invention ;
- la figure 4, par un schéma, une photodiode balancée et son principe de fonctionnement ;
- la figure 5, un formateur de voies selon un quatrième exemple de réalisation de l'invention ;
- la figure 6, un formateur de voies selon un cinquième exemple de réalisation de l'invention;
- la figure 7, les réponses en longueur d'onde des canaux d'un multiplexeur de type réseau sélectif planaire et d'un démultiplexeur en longueur d'onde.

L'invention se rapporte à un formateur de voies pour une antenne réseau comportant n sous-réseaux et m voies de réception. Pour la suite de la description, l'indice i est un entier compris entre 1 et n et se rapporte à l'un des sous-réseaux, et l'indice j est un entier compris entre 1 et m et se rapporte à l'une des voies de réception. Chaque sous-réseau peut délivrer un signal radiofréquence, c'est-à-dire une onde électromagnétique dont la fréquence est comprise entre 30 Hz et 3000 GHz. En général, le nombre de sous-réseaux est supérieur, voire largement supérieur, au nombre de voies de réception. On entend par formateur de voies, tout dispositif capable de délivrer, sur chaque voie de réception d'une antenne réseau, un signal radiofréquence correspondant soit à l'un des signaux radiofréquence issus des sous-réseaux, soit à une somme de ces signaux.

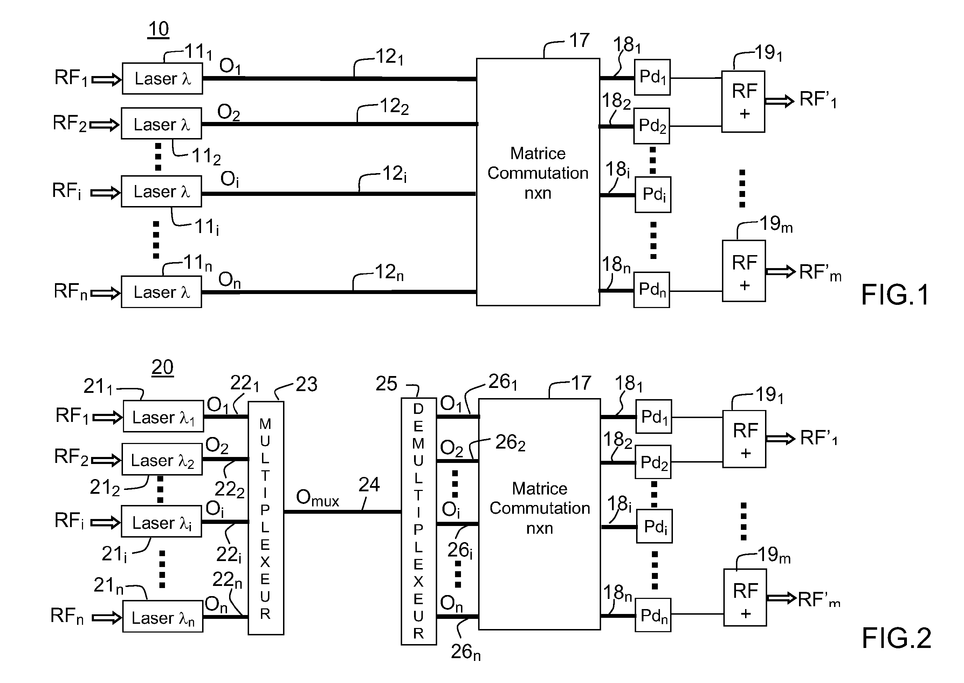

La figure 1 représente un formateur de voies 10 selon un premier exemple de réalisation de l'invention. Le formateur de voies 10 comprend n convertisseurs radiofréquence/optique 11ᵢ qui peuvent être réalisés en utilisant des diodes lasers, n fibres optiques 12ᵢ, une matrice de commutation optique 17, n photodiodes Pdᵢ et m additionneurs radiofréquence 19ᵢ. Chaque convertisseurs radiofréquence/optique 11ᵢ reçoit un signal radiofréquence RFᵢ en provenance d'un sous-réseau d'une antenne et délivre un signal optique Oᵢ modulé par le signal radiofréquence RFᵢ correspondant. On dit que le signal radiofréquence RFᵢ est porté optiquement. La matrice de commutation optique 17 comporte n entrées et n sorties. Chaque entrée reçoit un signal optique Oᵢ par l'intermédiaire d'une fibre optique 12ᵢ. La matrice de commutation optique 17 permet de réaliser le routage des signaux optiques Oᵢ sur les différentes sorties. Autrement dit, elle permet la transmission de signaux optiques entre chaque entrée et l'une des sorties. Elle est reconfigurable, dans le sens où il est possible de déterminer, pour chacune de ses entrées, la sortie à laquelle elle doit être associée. Chaque sortie est reliée à la partie sensible d'une photodiode Pdᵢ par l'intermédiaire d'une fibre optique 18ᵢ. Les photodiodes Pdᵢ permettent de démoduler les signaux optiques Oᵢ pour retrouver les signaux radiofréquence RFᵢ. Chaque photodiode Pdᵢ délivre ainsi en sortie l'un des signaux radiofréquence RFᵢ issus des sous-réseaux, en fonction du routage réalisé par la matrice de commutation 17. Chaque sortie de photodiode Pdᵢ est reliée à une entrée de l'un des additionneurs radiofréquence 19ᵢ. Dans l'exemple de la figure 1, l'additionneur radiofréquence référencé 19₁ est connecté aux sorties des photodiodes Pd₁ et Pd₂. Il délivre ainsi en sortie un signal radiofréquence RF'₁ égal à la somme des signaux radiofréquence issus des photodiodes Pd₁ et Pd₂. De manière générale, chaque additionneur radiofréquence 19ᵢ délivre un signal radiofréquence RF'ᵢ égal à la somme des signaux radiofréquence délivrés par les photodiodes Pdᵢ auxquelles il est connecté. Ces signaux radiofréquence dépendent eux-mêmes des signaux optiques présents dans les fibres optiques 18ᵢ, c'est-à-dire du routage effectué par la matrice de commutation 17. Le câblage optique entre la matrice de commutation optique 17 et les photodiodes Pdᵢ de même que le câblage radiofréquence entre les photodiodes Pdᵢ et les additionneurs radiofréquence 19ᵢ sont normalement figés. En conséquence, la formation des signaux radiofréquence RF'ⱼ en sortie des additionneurs radiofréquence 19ᵢ dépend uniquement du routage effectué par la matrice de commutation 17.

Dans l'exemple de la figure 1, on considère que la modulation des signaux optiques Oᵢ par les signaux radiofréquence RFᵢ est réalisée par des diodes lasers 11ᵢ. Cependant, tout convertisseur optoélectronique apte à moduler un signal optique par un signal radiofréquence, appelé dans ce cas convertisseur radiofréquence/optique, peut être utilisé à la place d'une diode laser 11ᵢ. Il peut s'agir par exemple d'un modulateur Mach-Zehnder associé à une diode laser. De même, la démodulation des signaux optiques peut être réalisée par tout type de convertisseur optoélectronique, appelé dans ce cas convertisseur optique/radiofréquence.

La figure 2 représente un formateur de voies 20 selon un deuxième exemple de réalisation de l'invention. Ce formateur de voies 20 se distingue de celui représenté à la figure 1 par les moyens mis en oeuvre pour la modulation des signaux optiques Oᵢ par les signaux radiofréquence RFᵢ et leur transmission entre les convertisseurs radiofréquence/optique et la matrice de commutation optique 17. En particulier, les convertisseurs radiofréquence/optique emploient des diodes lasers 21ᵢ dont les longueurs d'onde diffèrent les unes des autres. On dit que les diodes lasers 21ᵢ sont de couleurs différentes. Les signaux radiofréquence RFᵢ sont ainsi portés optiquement sur des longueurs d'onde différentes. Le formateur de voies comporte, en outre, un multiplexeur en longueur d'onde 23 et un démultiplexeur en longueur d'onde 25. Le multiplexeur en longueur d'onde 23 comprend n entrées aptes à recevoir les signaux optiques Oᵢ, par exemple par l'intermédiaire de fibres optiques 22ᵢ, et une sortie apte à délivrer un signal optique multiplexé Oₘᵤₓ par répartition en longueur d'onde. Le démultiplexeur en longueur d'onde 25 comprend une entrée apte à recevoir le signal optique multiplexé Oₘᵤₓ et n sorties aptes à délivrer les signaux optiques Oᵢ sur les n entrées de la matrice de commutation optique 17, par exemple par l'intermédiaire de fibres optiques 26ᵢ. La sortie du multiplexeur 23 peut être reliée optiquement à l'entrée du démultiplexeur 25 par une fibre optique 24. La formation des signaux radiofréquence RF'ᵢ peut, de la même manière que dans l'exemple de réalisation représenté à la figure 1, être réalisée par une matrice de commutation 17, des convertisseurs optique/radiofréquence (photodiodes Pdᵢ) et des additionneurs radiofréquence 19ᵢ. Ce formateur de voies 20 présente l'avantage supplémentaire, par rapport au formateur de voies 10 représenté à la figure 1, de ne nécessiter qu'un seul canal, par exemple une fibre optique, entre les convertisseurs radiofréquence/optique 21ᵢ et la matrice de commutation optique 17. Toute la partie aval à la matrice de commutation peut ainsi être réalisée à distance des sources de signaux radiofréquence RFᵢ avec un moyen de liaison simple et peu encombrant. Cet avantage est particulièrement intéressant dans les applications radar aéroportées, où les problèmes d'interconnexions, de poids et d'encombrement sont cruciaux.

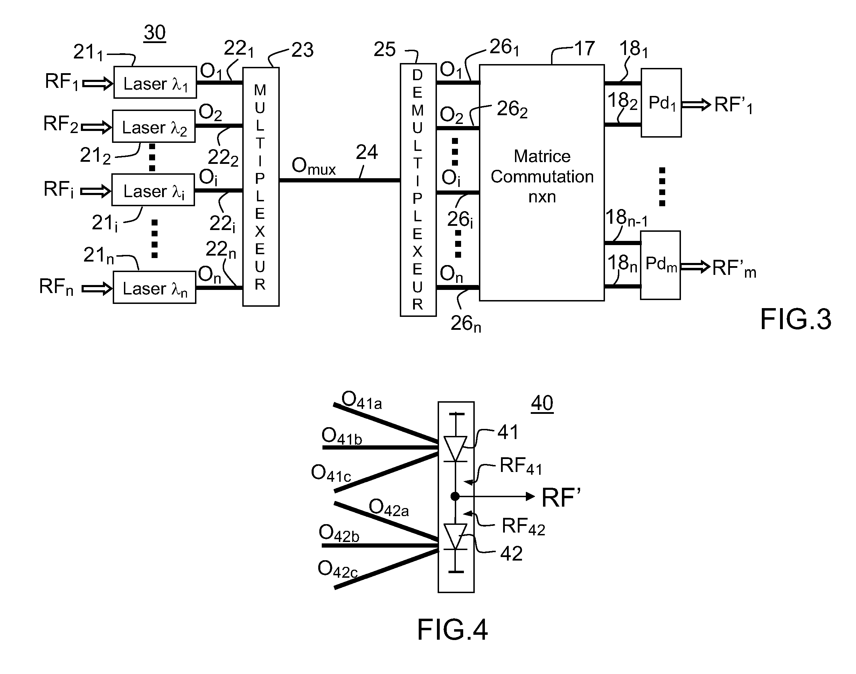

La figure 3 représente un formateur de voies 30 selon un troisième exemple de réalisation de l'invention. Ce formateur de voies 30 se distingue de celui représenté à la figure 2 par les moyens mis en oeuvre pour la démodulation des signaux optiques Oᵢ et pour l'addition des signaux RFᵢ. Le formateur de voies 30 comporte, à la place des n photodiodes Pdᵢ et des m additionneurs radiofréquence 19ᵢ, m photodiodes Pdᵢ. Les photodiodes Pdᵢ, ou uniquement certaines d'entre elles, reçoivent chacune plusieurs signaux optiques Oᵢ, par exemple par l'intermédiaire de fibres optiques 18ᵢ. Les signaux optiques Oᵢ peuvent indifféremment être reçus sur une ou plusieurs entrées d'une photodiode Pdᵢ. Sous réserve que les longueurs d'onde des signaux optiques Oᵢ portant les signaux radiofréquence RFᵢ soient différentes les unes des autres, chaque photodiode Pdᵢ réalise, lors de la démodulation des signaux optiques Oᵢ, une addition des signaux radiofréquence RFᵢ portés par les signaux optiques Oᵢ qu'elle reçoit. Les photodiodes Pdᵢ forment ainsi à la fois des convertisseurs optique/radiofréquence et des moyens de sommation.

Dans une forme particulière de réalisation, les photodiodes Pdᵢ, ou uniquement certaines d'entre elles, sont des photodiodes balancées. La figure 4 représente une telle photodiode. La photodiode balancée 40 comporte deux photodiodes 41, 42 associées en série et polarisées en inverse. Chaque photodiode 41, 42 peut recevoir un ou plusieurs signaux optiques. Dans l'exemple de la figure 4, la photodiode 41 reçoit trois signaux optiques O₄₁ₐ, O_{41b} et O_{41c} portant respectivement les signaux radiofréquence RF₄₁ₐ, RF_{41b} et RF_{41c}, et la photodiode 42 reçoit trois signaux optiques O₄₂ₐ, O_{42b} et O_{42c}, portant respectivement les signaux radiofréquence RF₄₂ₐ, RF_{42b} et RF_{42c}. De la même manière que pour une photodiode classique, sous réserve que les longueurs d'onde des signaux optiques O₄₁ₐ, O_{41b} et O_{41c} d'une part, et O₄₂ₐ, O_{42b} et O_{42c} d'autre part, soient différentes les unes des autres, la photodiode 41 délivre un signal radiofréquence RF₄₁ égal à la somme des signaux radiofréquence RF₄₁ₐ, RF_{41b} et RF_{41c}, et la photodiode 42 délivre un signal radiofréquence RF₄₂ égal à la somme des signaux radiofréquence RF₄₂ₐ, RF_{42b} et RF_{42c}, déphasée de 180° du fait de la polarisation inverse positive de la photodiode 42. Le signal radiofréquence RF' délivré par la photodiode balancée 40 est ainsi égal à la différence entre la somme des signaux radiofréquence RF₄₁ₐ, RF_{41b} et RF_{41c} et la somme des signaux radiofréquence RF₄₂ₐ, RF_{42b} et RF_{42c} :
RF' = RF₄₁ₐ + RF_{41b} + RF_{41c} - RF₄₂ₐ - RF_{42b} - RF_{42c}.
L'utilisation de photodiodes balancées comme convertisseurs optique/ radiofréquence permet ainsi de réaliser des sommes ou des différences entre les différents signaux radiofréquence RFᵢ.

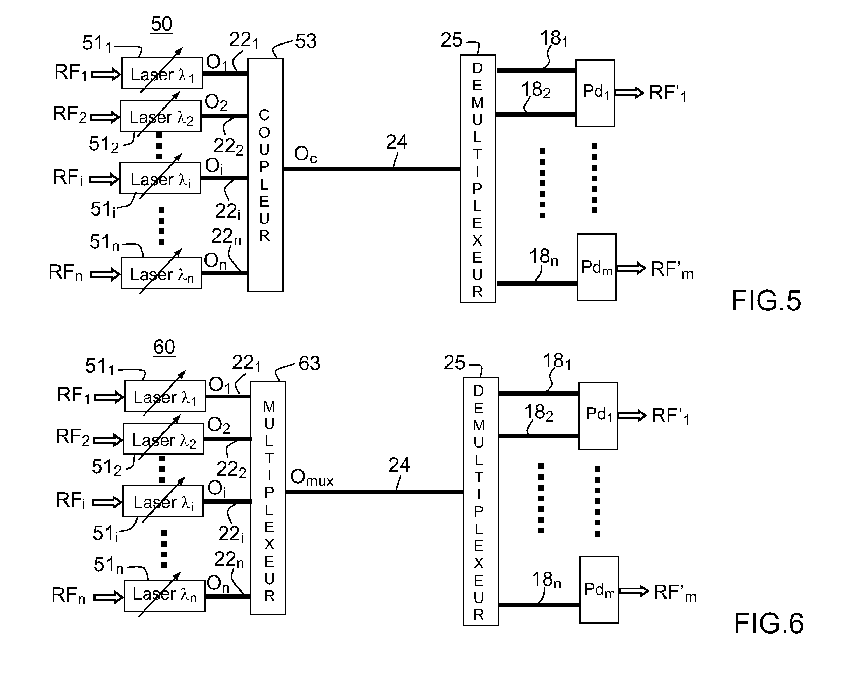

La figure 5 représente un formateur de voies 50 selon un quatrième exemple de réalisation de l'invention. Ce formateur de voies 50 comprend n convertisseurs radiofréquence/optique 51ᵢ dont les longueurs d'onde peuvent être configurées individuellement, n fibres optiques 22ᵢ, un coupleur optique 53, un démultiplexeur en longueur d'onde 25 et m photodiodes Pdⱼ. Chaque convertisseur radiofréquence/optique 51ᵢ reçoit un signal radiofréquence RFᵢ en provenance d'un sous-réseau et module un signal optique Oᵢ en fonction du signal radiofréquence RFᵢ reçu. Les signaux optiques Oᵢ sont rassemblés, ou couplés, par le coupleur optique 53 et forment un signal optique couplé O_{c}. Ce signal O_{c} est conduit à l'entrée du démultiplexeur en longueur d'onde 25, par exemple par l'intermédiaire d'une fibre optique 24. Le démultiplexeur en longueur d'onde 25 comprend n sorties reliées à des entrées de photodiodes Pdₘ, par exemple par l'intermédiaire de fibres optiques 18ᵢ, qui additionnent les signaux radiofréquence RFᵢ portés optiquement. Les photodiodes Pdₘ peuvent être des photodiodes balancées. Le démultiplexeur en longueur d'onde 25 répartissant les signaux optiques Oᵢ en fonction de leur longueur d'onde, les longueurs d'onde λᵢ des convertisseurs radiofréquence/optique 51ᵢ peuvent être configurées de manière à réaliser le routage désiré des signaux radiofréquence RFᵢ. Ces longueurs d'onde λᵢ doivent être toutes différentes les unes des autres de manière à ce que les signaux optiques Oᵢ puissent être répartis individuellement par le démultiplexeur en longueur d'onde 25. Sur cette figure 5, les moyens de sommation des signaux radiofréquence RFᵢ sont réalisés par des photodiodes 39ⱼ comportant chacune plusieurs entrées. Il serait néanmoins possible de séparer les moyens de sommation des convertisseurs optique/radiofréquence. En particulier, chaque sortie du démultiplexeur en longueur d'onde 25 peut être reliée à une photodiode Dpᵢ extrayant le signal radiofréquence RFᵢ porté optiquement, les signaux radiofréquence RFᵢ étant additionnés par des additionneurs radiofréquence.

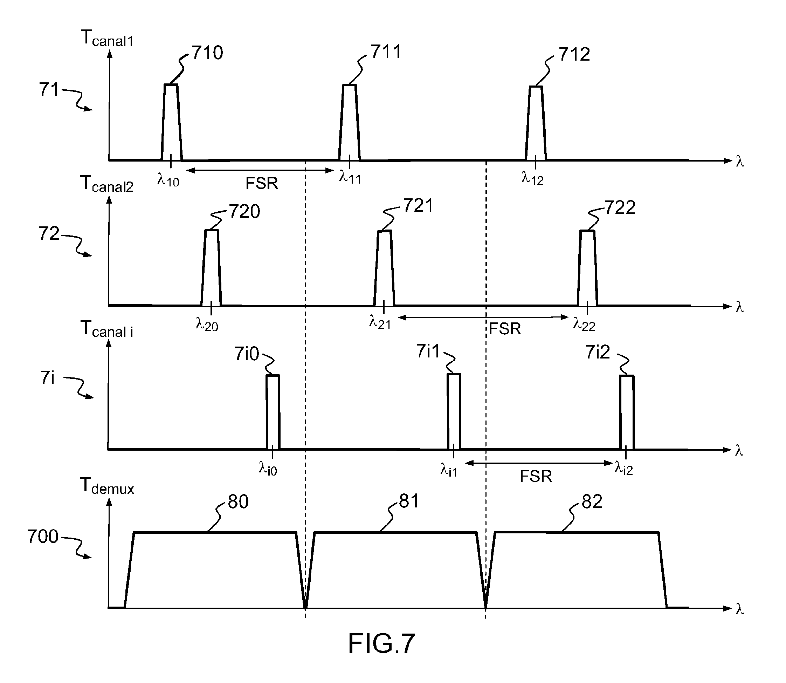

La figure 6 représente un formateur de voies 60 selon un cinquième exemple de réalisation de l'invention. Ce formateur de voies 60 se distingue de celui de la figure 5 en ce que le coupleur optique 53 est remplacé par un multiplexeur de type réseau sélectif planaire 63 ou, selon l'expression anglo-saxonne, "Arrayed WaveGuide (AWG)". Un multiplexeur de type AWG est un multiplexeur dont la réponse en longueur d'onde des canaux reliant les entrées à la sortie du multiplexeur est périodique. Chaque canal permet la transmission de signaux optiques dans des plages de longueur d'onde réparties périodiquement. La figure 7 illustre, par l'intermédiaire des graphiques 71, 72 et 7i, la réponse en longueur d'onde T_{canal_i} d'un premier, d'un deuxième et d'un i^{ème} canal d'un multiplexeur de type AWG. Sur ces graphiques sont représentées les plages de longueur d'onde possibles pour chaque canal. Le premier canal permet la transmission de signaux optiques dont les longueurs d'onde sont comprises dans l'une des plages de longueur d'onde 710, 711, 712, etc. respectivement centrées sur les longueurs d'onde λ₁₀, λ₁₁, λ₁₂, etc. Ces longueurs d'onde λ₁₀, λ₁₁, λ₁₂, etc. sont réparties périodiquement. La période séparant deux longueurs d'onde λ₁₀, λ₁₁, λ₁₂, etc. est appelée l'intervalle spectral libre, ou "Free Spectral Range" (FSR) en anglais, et est identique pour tous les canaux du multiplexeur. Le deuxième canal permet la transmission de signaux optiques dont les longueurs d'onde sont comprises dans l'une des plages de longueur d'onde 720, 721, 722, etc. respectivement centrées sur les longueurs d'onde λ₂₀, λ₂₁, λ₂₂, etc. Chacune de ces plages de longueur d'onde 720, 721, 722, etc. est décalée de la plage de longueur d'onde respective du premier canal, respectivement 710, 711, 712, etc. De façon générale, le canal i permet la transmission de signaux optiques dont les longueurs d'onde sont comprises dans des plages de longueur d'onde 7ik respectivement centrées sur l'une des longueurs d'onde λᵢₖ = λᵢ₀ + k.FSR, où k est un entier variant entre 0 et un entier supérieur ou égal à n-1, la longueur d'onde λᵢₖ étant située entre les longueurs d'onde λ₍ᵢ₋₁₎ₖ et λ₍ᵢ₊₁₎ₖ. Le signal optique multiplexé Oₘᵤₓ délivré par le multiplexeur de type AWG 63 est transmis à une entrée d'un démultiplexeur en longueur d'onde 25, par exemple par l'intermédiaire d'une fibre optique 24. Le démultiplexeur en longueur d'onde 25 doit être configuré de manière à ce que chaque canal reliant l'entrée à l'une des sorties du démultiplexeur permette la transmission de signaux optiques dans une plage de longueur d'onde couvrant une seule plage de longueur d'onde de chacun des canaux du multiplexeur de type AWG. La figure 7 illustre également, par le graphique 700, la réponse en longueur d'onde T_{demux} des différents canaux du démultiplexeur en longueur d'onde 25. Le premier canal permet la transmission de signaux optiques dont les longueurs d'onde sont comprises dans une plage de longueur d'onde 80 couvrant toutes les (n) plages de longueur d'onde 7i0 centrées sur les longueurs d'onde λᵢ₀, mais uniquement ces plages. De manière générale, le canal k permet la transmission de signaux optiques dont les longueurs d'onde sont comprises dans une plage de longueur d'onde 8k couvrant une seule plage de longueur d'onde 7ik de chacun des (n) canaux du multiplexeur de type AWG.

De la même manière que le formateur de voies 50 représenté à la figure 5, le formateur de voies 60 pourrait comporter des additionneurs radiofréquence pour additionner les signaux radiofréquence RFᵢ, chaque signal optique Oᵢ étant démodulé individuellement par un convertisseur optique/radiofréquence avant de sommer le signal radiofréquence associé à un ou plusieurs autres signaux radiofréquence.

Les formateurs de voies 50 et 60 présentent l'avantage de commuter plus rapidement d'une configuration à une autre que les formateurs de voies 10, 20 et 30. Le changement de configuration s'effectue simplement en modifiant les longueurs d'onde des convertisseurs radiofréquence/optique, en l'occurrence des convertisseurs radiofréquence/ optique 51ᵢ. La vitesse de commutation peut ainsi être inférieure à une microseconde.

Dans les différents exemples de réalisation des formateurs de voies représentés aux figures 1, 2, 3, 5 et 6, il a été considéré que chaque convertisseur radiofréquence/optique délivrait un seul signal optique portant le signal radiofréquence. Les convertisseurs radiofréquence/optique pourraient néanmoins délivrer chacun deux signaux optiques, l'un des deux signaux radiofréquence portés optiquement étant déphasé de 180° par rapport à l'autre. Un tel modulateur est appelé modulateur à double sortie. Le doublement des signaux optiques implique, pour le formateur de voies de la figure 1, de doubler le nombre de convertisseurs optique/radiofréquence, le nombre d'entrées et de sorties de la matrice de commutation, et le nombre total d'entrées des additionneurs hyperfréquence. Pour les formateurs de voies des figures 2, 3, 5 et 6, cela implique, en plus ou à la place, de dupliquer l'ensemble multiplexeur-démultiplexeur ou coupleur-démultiplexeur. L'un des ensembles peut alors être dédié aux signaux radiofréquence en phase et l'autre ensemble aux signaux radiofréquence en opposition de phase. La duplication des signaux radiofréquence permet de réaliser des combinaisons supplémentaires de signaux radiofréquence pour d'autres voies de réception. De plus, le fait de disposer, dans le même temps, des signaux radiofréquence et de leur double en opposition de phase permet de réaliser de façon simple des différences entre signaux radiofréquence.

## Revendications

1. Formateur de voies pouvant équiper une antenne réseau comportant n sous-réseaux et m voies de réception, avec n supérieur ou égal à m, chaque sous-réseau étant apte à délivrer un signal radiofréquence (RFᵢ), le formateur de voies (10, 20, 30, 50, 60) étant **caractérisé en ce qu'**il comporte :
- n convertisseurs radiofréquence/optique (11ᵢ, 21ᵢ, 51ᵢ), chaque convertisseur radiofréquence/optique étant apte à recevoir en entrée le signal radiofréquence (RFᵢ) issu de l'un des sous-réseaux et à délivrer en sortie un signal optique (Oᵢ) modulé par ledit signal radiofréquence (RFᵢ) issu de l'un des sous-réseaux, moyennant quoi chaque signal optique porte un signal radiofréquence respectif,
- m à n convertisseurs optique/radiofréquence (Pdᵢ, Pdⱼ), chaque convertisseur optique/radiofréquence étant apte à recevoir un signal optique (Oᵢ) et à délivrer le signal radiofréquence (RFᵢ, RF'ⱼ) porté par ce signal optique (Oᵢ),
- des moyens reconfigurables de routage des signaux optiques (17, 25, 51ᵢ, 53, 63) aptes à diriger chaque signal optique (Oᵢ) issu d'un convertisseur radiofréquence/optique respectif (11ᵢ, 21ᵢ, 51ᵢ) vers l'un desdits convertisseurs optique/radiofréquence (Pdᵢ, Pdⱼ), et
- au moins un moyen de sommation (19ⱼ, Pdⱼ), apte à sommer une pluralité de signaux radiofréquence (RFᵢ) portés par des signaux optiques respectifs et à délivrer un signal radiofréquence (RF'ⱼ) égal à ladite somme de signaux radiofréquence (RFᵢ) sur l'une des voies de réception,
moyennant quoi chaque voie de réception délivre un signal radiofréquence (RF'ⱼ) correspondant à une somme de 1 à n signaux radiofréquence (RFᵢ) issus des sous-réseaux.

2. Formateur de voies selon la revendication 1, dans lequel les moyens reconfigurables de routage des signaux optiques sont une matrice de commutation optique (17) comportant n entrées et n sorties, chaque entrée de la matrice de commutation optique (17) étant apte à recevoir l'un des signaux optiques (Oⱼ) issus des convertisseurs radiofréquence/optique (11ᵢ), et chaque sortie de la matrice de commutation (17) étant connectée à une entrée d'un convertisseur optique/radiofréquence (Pdⱼ, Pdⱼ).

3. Formateur de voies selon la revendication 2, dans lequel les n convertisseurs radiofréquence/optique (21;) sont aptes à délivrer des signaux optiques (O_{¡}) compris dans des plages de longueur d'onde distinctes les unes des autres, le formateur de voies (20, 30) comportant, en outre :
- un multiplexeur en longueur d'onde (23) comprenant n entrées aptes à recevoir les n signaux optiques (O_{¡}) et une sortie apte à délivrer un signal optique multiplexé (Oₘᵤₓ) par répartition en longueur d'onde, et
- un démultiplexeur en longueur d'onde (25) comprenant une entrée apte à recevoir le signal optique multiplexé (Oₘᵤₓ) et n sorties aptes à délivrer les n signaux optiques démultiplexés (O_{¡}) sur les n entrées de la matrice de commutation optique (17).

4. Formateur de voies selon la revendication 1, dans lequel les moyens reconfigurables de routage des signaux optiques comprennent :
- les n convertisseurs radiofréquence/optique (51ᵢ), les longueurs d'onde (λᵢ) des signaux optiques (Oᵢ) délivrés par lesdits convertisseurs pouvant être configurées individuellement et étant différentes les unes des autres,
- un coupleur optique (53) comportant n entrées aptes à recevoir les n signaux optiques (O_{¡}) et une sortie apte à délivrer un signal optique couplé (O_{c}), et
- un démultiplexeur en longueur d'onde (25) comportant une entrée apte à recevoir le signal optique couplé (O_{c}) et n sorties, les n signaux optiques (O_{¡}) étant délivrés sur lesdites sorties en fonction de leur longueur d'onde (λᵢ).

5. Formateur de voies selon la revendication 1, dans lequel les moyens reconfigurables de routage des signaux optiques comprennent :
- les n convertisseurs radiofréquence/optique (51ᵢ), les longueurs d'onde (λᵢ) des signaux optiques (Oⱼ) délivrés par lesdits convertisseurs pouvant être configurées individuellement,
- un réseau sélectif planaire (63) comportant n entrées aptes à recevoir les n signaux optiques (Oⱼ) et une sortie apte à délivrer un signal optique multiplexé (Oₘᵤₓ), chaque entrée du réseau sélectif planaire (63) étant reliée à la sortie par un canal, chaque canal permettant la transmission de signaux optiques dans des plages de longueur d'onde (7ik) réparties périodiquement, et
- un démultiplexeur en longueur d'onde (25) comportant une entrée apte à recevoir le signal optique multiplexé (Oₘᵤₓ) et n sorties, l'entrée du démultiplexeur en longueur d'onde (25) étant reliée à chaque sortie par un canal,
le réseau sélectif planaire (63) et le démultiplexeur en longueur d'onde (25) étant configurés de manière à ce que chaque canal du démultiplexeur permette la transmission de signaux optiques dans une plage de longueur d'onde (8k) couvrant une seule plage de longueur d'onde (7ik) de chacun des canaux du réseau sélectif planaire (63).

6. Formateur de voies selon la revendication 5, dans lequel la largeur de la plage de longueur d'onde (8k) de chaque canal du démultiplexeur en longueur d'onde (25) est sensiblement égale à la période de répétition (FSR) des plages de longueur d'onde (7ik) de chaque canal du réseau sélectif planaire (63).

7. Formateur de voies selon l'une des revendications 3 à 6, dans lequel la sortie du multiplexeur en longueur d'onde (23), du coupleur optique (53) ou du réseau sélectif planaire (63) est reliée à l'entrée du démultiplexeur en longueur d'onde (25) par une fibre optique (24) apte à transmettre des signaux optiques (Oₘᵤₓ, O_{c}) sur toutes les plages de longueur d'onde (7ik) utilisées par les convertisseurs radiofréquence/optique (21ᵢ, 51ᵢ).

8. Formateur de voies selon l'une des revendications 3 à 7, dans lequel chaque moyen de sommation comporte un convertisseur optique/radiofréquence (Pdⱼ) comprenant une entrée apte à recevoir de deux à n signaux optiques (Oⱼ) et une sortie apte à délivrer un signal radiofréquence (RF'ⱼ) correspondant à la somme des signaux radiofréquences (RFᵢ) portés par les signaux optiques (O_{¡}) reçus en entrée.

9. Formateur de voies selon l'une des revendications 1 à 7, dans lequel chaque moyen de sommation comporte un additionneur radiofréquence (19ⱼ) comprenant au moins deux entrées recevant chacune un signal radiofréquence (RFᵢ) et une sortie apte à délivrer un signal radiofréquence (RF'ⱼ) correspondant à la somme des signaux radiofréquences (RFᵢ) reçus en entrée.

10. Formateur de voies selon l'une des revendications précédentes, dans lequel un moyen de sommation comporte un convertisseur optique/radiofréquence (40) comprenant deux entrées et une sortie, chaque entrée étant apte à recevoir au moins un signal optique (O₄₁, O₄₂) portant un signal radiofréquence, la sortie étant apte à délivrer un signal radiofréquence (RF') correspondant à la différence entre le ou les signaux radiofréquence portés par le ou les signaux optiques (O₄₁) reçus sur une première entrée du convertisseur optique/radiofréquence (40) et le ou les signaux radiofréquence portés par le ou les signaux optiques (O₄₂) reçus sur une deuxième entrée du convertisseur optique/radiofréquence (40).

11. Formateur de voies selon la revendication 10, dans lequel le moyen de sommation apte à délivrer un signal radiofréquence (RF') correspondant à une différence de signaux radiofréquence est une photodiode balancée (40).

12. Formateur de voies selon l'une des revendications précédentes, dans lequel chaque convertisseur radiofréquence/optique délivre deux signaux optiques, l'un des deux signaux radiofréquence portés optiquement étant en opposition de phase par rapport à l'autre, les moyens reconfigurables de routage des signaux optiques (17, 23, 25, 53, 63), les convertisseurs optique/radiofréquence (Pdᵢ, Pdⱼ) et le ou les moyens de sommation (19i, Pdⱼ) étant adaptés afin de délivrer sur chaque voie de réception un signal radiofréquence correspondant à une somme de signaux radiofréquence en phase, en opposition de phase, ou des deux.

## Patentansprüche

1. Erzeuger von Kanälen, mit denen eine Netzantenne ausgestattet sein kann, die n Teilnetze und m Empfangskanäle umfasst, wobei n gleich oder größer als m ist, wobei jedes Teilnetz ein Funkfrequenzsignal (RFᵢ) liefern kann, wobei der Erzeuger von Kanälen (10, 20, 30, 50, 60) **dadurch gekennzeichnet ist, dass** er Folgendes umfasst:
- n Funkfrequenz-Optik-Wandler (11ᵢ, 21ᵢ, 51ᵢ), wobei jeder Funkfrequenz-Optik-Wandler als Eingang das von einem der Teilnetze ausgegebene Funkfrequenzsignal (RFᵢ) empfangen und als Ausgang ein optisches Signal (Oᵢ) liefern kann, das durch das von einem der Teilnetze ausgegebene Funkfrequenzsignal (RFᵢ) moduliert ist, mit dem jedes optische Signal ein jeweiliges Funkfrequenzsignal trägt,
- m bis n Optik-Funkfrequenz-Wandler (Pdᵢ, Pdⱼ), wobei jeder Optik-Funkfrequenz-Wandler ein optisches Signal (Oᵢ) empfangen und das von diesem optischen Signal (Oᵢ) getragene Funkfrequenzsignal (RFᵢ, RF'ⱼ) liefern kann,
- umkonfigurierbare Mittel zum Leiten der optischen Signale (17, 25, 51ᵢ, 53, 63), die jedes von einem jeweiligen Funkfrequenz-Optik-Wandler (11ᵢ, 21ᵢ, 51ᵢ) ausgegebene optische Signal (Oᵢ) zu einem der Optik-Funkfrequenz-Wandler (Pdᵢ, Pdⱼ) leiten können, und
- wenigstens ein Summiermittel (19ⱼ, Pdⱼ) zum Summieren von mehreren von den jeweiligen optischen Signalen getragenen Funkfrequenzsignalen (RFᵢ) und zum Liefern eines Funkfrequenzsignals (RF'ⱼ), das gleich der Summe von Funkfrequenzsignalen (RFᵢ) ist, auf einem der Empfangskanäle,
mittels dem jeder Empfangskanal ein Funkfrequenzsignal (RF'ⱼ) liefert, das einer Summe von 1 bis n von den Teilnetzen ausgegebenen Funkfrequenzsignalen (RFᵢ) entspricht.

2. Erzeuger von Kanälen nach Anspruch 1, wobei die umkonfigurierbaren Mittel zum Leiten von optischen Signalen eine optische Schaltmatrix (17) mit n Eingängen und n Ausgängen sind, wobei jeder Eingang der optischen Schaltmatrix (17) eines der von den Funkfrequenz-Optik-Wandlern (11ᵢ) ausgegebenen optischen Signale (Oᵢ) empfangen kann und jeder Ausgang der Schaltmatrix (17) mit einem Eingang eines Optik-Funkfrequenz-Wandlers (Pdⱼ, Pdⱼ) verbunden ist.

3. Erzeuger von Kanälen nach Anspruch 2, wobei die n Funkfrequenz-Optik-Wandler (21ᵢ) optische Signale (Oᵢ) liefern können, die in voneinander getrennten Wellenlängenbereichen enthalten sind, wobei der Erzeuger von Kanälen (20, 30) ferner Folgendes umfasst:
- einen Wellenlängenmultiplexer (23), der n Eingänge zum Empfangen der n optischen Signale (Oᵢ) und einen Ausgang zum Liefern eines durch Wellenlängenverteilung multiplexierten optischen Signals (Oₘᵤₓ) umfasst, und
- einen Wellenlängendemultiplexer (25), der einen Eingang zum Empfangen des multiplexierten optischen Signals (Oₘᵤₓ) und n Ausgänge zum Liefern der n demultiplexierten optischen Signale (Oᵢ) auf den n Eingängen der optischen Schaltmatux (17) umfasst.

4. Erzeuger von Kanälen nach Anspruch 1, wobei die umkonfigurierbaren Mittel zum Leiten von optischen Signalen Folgendes umfassen:
- die n Funkfrequenz-Optik-Wandler (51ᵢ), wobei die Wellenlängen (λᵢ) der von den Wandlern gelieferten optischen Signale (Oᵢ) individuell konfiguriert werden können und sich voneinander unterscheiden,
- einen optischen Koppler (53), der n Eingänge zum Empfangen der n optischen Signale (Oᵢ) und einen Ausgang zum Liefern eines gekoppelten optischen Signals (O_{c}) umfasst, und
- einen Wellenlängendemultiplexer (25), der einen Eingang zum Empfangen des gekoppelten optischen Signals (O_{c}) und n Ausgänge umfasst, wobei die n optischen Signale (Oᵢ) auf den Ausgängen in Abhängigkeit von ihrer Wellenlänge (λᵢ) geliefert werden.

5. Erzeuger von Kanälen nach Anspruch 1, wobei die umkonfigurierbaren Mittel zum Leiten der optischen Signale Folgendes umfassen:
- die n Funkfrequenz-Optik-Wandler (51ᵢ), wobei die von den Wandlern gelieferten Wellenlängen (λᵢ) der optischen Signale (Oᵢ) individuell konfiguriert werden können,
- ein planares selektives Netz (63), das n Eingänge zum Empfangen der n optischen Signale (Oᵢ) und einen Ausgang zum Liefern eines multiplexierten optischen Signals (Oₘᵤₓ) umfasst, wobei jeder Eingang des planaren selektiven Netzes (63) mit dem Ausgang durch einen Pfad verbunden ist, wobei jeder Pfad die Übertragung von optischen Signalen in den periodisch verteilten Wellenlängenbereichen (7ik) zulässt, und
- einen Wellenlängendemultiplexer (25), der einen Eingang zum Empfangen des multiplexierten optischen Signals (Oₘᵤₓ) und n Ausgänge umfasst, wobei der Eingang des Wellenlängendemultiplexers (25) mit jedem Ausgang durch einen Pfad verbunden ist,
wobei das planare selektive Netz (63) und der Wellenlängendemultiplexer (25) so konfiguriert sind, dass jeder Pfad des Demultiplexers die Übertragung von optischen Signalen in einem Wellenlängenbereich (8k) zulässt, der einen einzigen Wellenlängenbereich (7ik) von jedem der Pfade des planaren selektiven Netzes (63) abdeckt.

6. Erzeuger von Kanälen nach Anspruch 5, wobei die Breite des Wellenlängenbereichs (8k) jedes Pfads des Wellenlängendemultiplexers (25) im Wesentlichen gleich der Wiederholperiode (FSR) der Wellenlängenbereiche (7ik) jedes Pfads des planaren selektiven Netzes (63) ist.

7. Erzeuger von Kanälen nach einem der Ansprüche 3 bis 6, wobei der Ausgang des Wellenlängenmultiplexers (23), des optischen Kopplers (53) und des planaren selektiven Netzes (63) mit dem Eingang des Wellenlängendemultiplexers (25) durch einen Lichtwellenleiter (24) zum Übertragen von optischen Signalen (Oₘᵤₓ, O_{c}) in allen Wellenlängenbereichen (7ik) verbunden ist, die von den Funkfrequenz-Optik-Wandlern (21ᵢ, 51ᵢ) benutzt werden.

8. Erzeuger von Kanälen nach einem der Ansprüche 3 bis 7, wobei jedes Summierungsmittel einen Optik-Funkfrequenz-Wandler (Pdⱼ) umfasst, der einen Eingang zum Empfangen von zwei bis n optischen Signalen (Oᵢ) und einen Ausgang zum Liefern eines Funkfrequenzsignals (RF'ⱼ) umfasst, das der Summe der Funkfrequenzsignale (RFᵢ) entspricht, die von den als Eingang empfangenen optischen Signalen (Oᵢ) getragen werden.

9. Erzeugen von Kanälen nach einem der Ansprüche 1 bis 7, wobei jedes Summierungsmittel einen Funkfrequenzaddierer (19ⱼ) umfasst, der wenigstens zwei Eingänge, die jeweils ein Funkfrequenzsignal (RFᵢ) empfangen, und einen Ausgang zum Liefern eines Funkfrequenzsignals (RF'ⱼ) umfasst, das der Summe der als Eingang empfangenen Funkfrequenzsignale (RFᵢ) entspricht.

10. Erzeuger von Kanälen nach einem der vorherigen Ansprüche, wobei ein Summierungsmittel einen Optik-Funkfrequenz-Wandler (40) umfasst, der zwei Eingänge und einen Ausgang umfasst, wobei jeder Eingang wenigstens ein ein Funkfrequenzsignal tragendes optisches Signal (O₄₁, O₄₂) empfangen kann, wobei der Ausgang ein Funkfrequenzsignal (RF') liefern kann, das der Differenz zwischen dem oder den Funkfrequenzsignal(en) entspricht, das/die von dem oder den auf einem ersten Eingang des Optik-Funkfrequenz-Wandlers (40) empfangenen optischen Signal(en) (O₄₁) getragen wird, und dem oder den Funkfrequenzsignal(en), das/die von dem oder den an einem zweiten Eingang des Optik-Funkfrequenz-Wandlers (40) empfangenen optischen Signal(en) (O₄₂) getragen wird/werden.

11. Erzeuger von Kanälen nach Anspruch 10, wobei das Summierungsmittel zum Liefern eines Funkfrequenzsignals (RF'), das einer Differenz von Funkfrequenzsignalen entspricht, eine ausgeglichene Fotodiode (40) ist.

12. Erzeuger von Kanälen nach einem der vorherigen Ansprüche, wobei jeder Funkfrequenz-Optik-Wandler zwei optische Signale liefert, wobei eines der beiden optisch getragenen Funkfrequenzsignale gegenphasig gegenüber dem anderen ist, wobei die umkonfigurierbaren Mittel zum Leiten von optischen Signalen (17, 23, 25, 53, 63), die Optik-Funkfrequenz-Wandler (Pdᵢ, Pdⱼ) und das oder die Summierungsmittel (19ᵢ, Pdⱼ) zum Liefern, auf jedem Empfangskanal, eines Funkfrequenzsignals ausgelegt sind, das einer Summe von phasengleichen, gegenphasigen oder beiden Funkfrequenzsignalen entspricht.

## Claims

1. A channel former that can be fitted to an array antenna comprising n sub-arrays and m receiving channels, n being greater than or equal to m, each sub-array being able to deliver a radiofrequency signal (RFᵢ), the channel former (10, 20, 30, 50, 60) being **characterised in that** it comprises:
- n radiofrequency/optical converters (11ᵢ, 21ᵢ, 51ᵢ), each radiofrequency/optical converter being able to receive as input the radiofrequency signal (RFᵢ) deriving from one of the sub-arrays and to deliver as output an optical signal (Oᵢ) modulated by said radiofrequency signal (RFᵢ) deriving from one of the sub-arrays, by means of which each optical signal carries a respective radiofrequency signal,
- m to n optical/radiofrequency converters (Pdᵢ, Pdⱼ), each optical/radiofrequency converter being able to receive an optical signal (Oᵢ) and to deliver the radiofrequency signal (RFᵢ, RF'ⱼ) carried by this optical signal (Oᵢ),
- reconfigurable optical signal routing means (17, 25, 51ᵢ, 53, 63) able to direct each optical signal (Oᵢ) deriving from a respective radiofrequency/optical converter (11ᵢ, 21ᵢ, 51ᵢ) to one of said optical/radiofrequency converters (Pdᵢ, Pdⱼ), and
- at least one summing means (19ⱼ, Pdⱼ) able to add up a plurality of radiofrequency signals (RFᵢ) carried by respective optical signals and to deliver a radiofrequency signal (RF'ⱼ) equal to said sum of radiofrequency signals (RFᵢ) on one of the receiving channels,
by means of which each receiving channel delivers a radiofrequency signal (RF'ⱼ) corresponding to a sum of 1 to n radiofrequency signals (RFᵢ) deriving from the sub-arrays.

2. The channel former according to claim 1, wherein the reconfigurable optical signal routing means are an optical switching matrix (17) comprising n inputs and n outputs, each input of the optical switching matrix (17) being able to receive one of the optical signals (Oᵢ) deriving from the radiofrequency/optical converters (11ᵢ), and each output of the switching matrix (17) being connected to an input of an optical/radiofrequency converter (Pdⱼ, Pdⱼ).

3. The channel former according to claim 2, wherein the n radiofrequency/optical converters (21ᵢ) are able to deliver optical signals (Oᵢ) included in wavelength ranges that are distinct from one another, the channel former (20, 30) comprising, furthermore:
- a wavelength multiplexer (23) comprising n inputs able to receive the n optical signals (Oᵢ) and an output able to deliver a multiplexed optical signal (Oₘᵤₓ) by wavelength distribution, and
- a wavelength demultiplexer (25) comprising an input able to receive the multiplexed optical signal (Oₘᵤₓ) and n outputs able to deliver the n demultiplexed optical signals (Oᵢ) on the n inputs of the optical switching matrix (17).

4. The channel former according to claim 1, wherein the reconfigurable optical signal routing means comprise:
- the n radiofrequency/optical converters (51ᵢ), the wavelengths (λᵢ) of the optical signals (Oᵢ) delivered by said converters being able to be configured individually and being different from one another,
- an optical coupler (53) comprising n inputs able to receive the n optical signals (Oᵢ) and an output able to deliver a coupled optical signal (O_{c}), and
- a wavelength demultiplexer (25) comprising an input able to receive the coupled optical signal (O_{c}) and n outputs, the n optical signals (Oᵢ) being delivered on said outputs as a function of their wavelength (λᵢ).

5. The channel former according to claim 1, wherein the reconfigurable optical signal routing means comprise:
- the n radiofrequency/optical converters (51ᵢ), the wavelengths (λᵢ) of the optical signals (Oᵢ) delivered by said converters being able to be configured individually,
- a planar selective array (63) comprising n inputs able to receive the n optical signals (Oᵢ) and an output able to deliver a multiplexed optical signal (Oₘᵤₓ), each input of the planar selective array (63) being joined to the output by a channel, each channel enabling the transmission of optical signals within periodically allocated wavelength ranges (7ik), and
- a wavelength demultiplexer (25) comprising an input able to receive the multiplexed optical signal (Oₘᵤₓ) and n outputs, the input of the wavelength demultiplexer (25) being joined to each output by a channel,
the planar selective array (63) and the wavelength demultiplexer (25) being configured such that each channel of the demultiplexer enables the transmission of optical signals within a wavelength range (8k) covering a single wavelength range (7ik) of each of the channels of the planar selective array (63).

6. The channel former according to claim 5, wherein the breadth of the wavelength range (8k) of each channel of the wavelength multiplexer (25) is substantially equal to the repetition period (FSR) of the wavelength ranges (7ik) of each channel of the planar selective array (63).

7. The channel former according to any of claims 3 to 6, wherein the output of the wavelength multiplexer (23), of the optical coupler (53) or of the planar selective array (63) is joined to the input of the wavelength demultiplexer (25) by an optical fibre (24) able to transmit optical signals (Oₘᵤₓ, O_{c}) over all of the wavelength ranges (7ik) used by the radiofrequency/optical converters (21ᵢ, 51ᵢ).

8. The channel former according to any of claims 3 to 7, wherein each summing means comprises an optical/radiofrequency converter (Pdⱼ) comprising an input able to receive from two to n optical signals (Oᵢ) and an output able to deliver a radiofrequency signal (RF'ⱼ) corresponding to the sum of the radiofrequency signals (RFᵢ) carried by the optical signals (Oᵢ) received as input.

9. The channel former according to any of claims 1 to 7, wherein each summing means comprises a radiofrequency adder (19ⱼ) comprising at least two inputs, each receiving a radiofrequency signal (RFᵢ) and an output able to deliver a radiofrequency signal (RF'ⱼ) corresponding to the sum of the radiofrequency signals (RFᵢ) received as input.

10. The channel former according to any of the preceding claims, wherein a summing means comprises an optical/radiofrequency converter (40) comprising two inputs and one output, each input being able to receive at least one optical signal (O₄₁, O₄₂) carrying a radiofrequency signal, the output being able to deliver a radiofrequency signal (RF') corresponding to the difference between the radiofrequency signal or signals carried by the optical signal or signals (O₄₁) received at a first input of the optical/radiofrequency converter (40) and the radiofrequency signal or signals carried by the optical signal or signals (O₄₂) received at a second input of the optical/radiofrequency converter (40).

11. The channel former according to claim 10, wherein the summing means able to deliver a radiofrequency signal (RF') corresponding to a radiofrequency signal difference is a balanced photodiode (40).

12. The channel former according to any of the preceding claims, wherein each radiofrequency/optical converter delivers two optical signals, one of the two radiofrequency signals carried optically being out of phase in relation to the other, the reconfigurable optical signal routing means (17, 23, 25, 53, 63), the optical/radiofrequency converters (Pdᵢ, Pdⱼ) and the summing mean or means (19ᵢ, Pdⱼ) being adapted in order to deliver on each receiving channel a radiofrequency signal corresponding to a sum of in-phase radiofrequency signals, out-of-phase radiofrequency signals, or both.
